# FASCICULE DE BREVET EUROPEEN

(11) **EP 0 581 648 B1**
(45) Date de publication et mention de la délivrance du brevet: **18.09.1996**
(21) Numéro de dépôt: 93401892.0
(22) Date de dépôt: 21.07.1993
(51) Int. Cl.: B60N 2/44, F16B 21/10

(54) **Dispositif d'assemblage à emboîtement et verrouillage**
Schnappverbindungsvorrichtung
Snap-action connecting device

(30) Priorité: 30.07.1992 FR 9209459
(43) Date de publication de la demande: 02.02.1994
(73) Titulaire: CESA COMPAGNIE EUROPEENNE DE SIEGES POUR AUTOMOBILES, F-92307 Levallois-Perret Cédex (FR)
(72) Inventeur: De Sa Amorim, David, F-45200 Amilly (FR); Chabanne, Jean-Pierre, F-89710 Champvallon (FR); Colin, Jacques, F-45700 Montcresson (FR)
(74) Mandataire: Polus, Camille

(56) Documents cités:
- EP-A- 0 165 593
- DE-A- 3 437 803
- FR-A- 2 159 670
- FR-A- 2 375 068
- FR-A- 2 526 289
- FR-A- 2 636 576
- GB-A- 2 195 733
- US-A- 3 544 162
- US-A- 3 945 671

## Description

La présente invention concerne un dispositif d'assemblage à emboîtement et verrouillage perfectionné pour réunir deux pièces et son application notamment aux sièges de véhicules automobiles.

Dans de nombreux secteurs techniques, il est nécessaire de réunir deux pièces, l'une femelle et l'autre mâle, et pour ce faire on a déjà proposé des dispositifs d'assemblage à emboîtement et verrouillage.

Un secteur technique où il est nécessaire de réunir deux pièces, l'une femelle et l'autre mâle, est par exemple celui de la fabrication des sièges d'automobiles.

Les sièges d'automobiles sont généralement munis d'armatures qui comprennent, habituellement, un cadre de dossier et un cadre d'assise associés l'un à l'autre à l'aide d'au moins une articulation latérale faite d'un axe qui joint deux flasques dont l'un est solidaire du cadre de l'assise et l'autre du cadre du dossier.

Ces armatures sont habituellement revêtues de coussins. Ces coussins, que ce soit celui de l'assise ou celui du dossier, sont le plus souvent constitués d'un revêtement extérieur du type housse par exemple textile à l'intérieur duquel se trouve une matelassure généralement en mousse. Cette mousse assure le remplissage du revêtement et procure le confort de l'occupant assis sur le siège et qui repose sur les coussins.

Une technique classique pour la confection d'un tel coussin consiste à utiliser un moule dans lequel est placé le revêtement extérieur et dans lequel on injecte une composition moussante qui génèrera la mousse qui formera un tout indissociable avec le revêtement textile extérieur. Cette technique est habituellement une technique de garnissage in situ.

Les coussins ainsi fabriqués sont ensuite fixés à l'armature du siège.

Il a déjà été aussi proposé d'associer cette technique de garnissage in situ à celle dite de garnissage par surmoulage. Selon cette technique dite de surmoulage, l'armature du siège proprement dite et/ou une nappe élastique de fils de suspension, le plus souvent métallique, sont placés dans le moule en question où l'on procède ensuite à la technique de garnissage in situ pour fabriquer les coussins.

On comprend que lorsqu'on confectionne des sièges en associant la technique de garnissage in situ à celle de surmoulage de l'armature et éventuellement de sa nappe élastique, il est nécessaire de disposer d'une armature de siège dont les cadres du dossier et de l'assise sont dissociés.

Ensuite, il faut joindre le cadre du dossier et le cadre de l'assise qui sont habituellement réunis par au moins une articulation faite d'un axe qui joint deux flasques dont l'un est solidaire du cadre du dossier et l'autre de celui de l'assise.

Des dispositifs d'assemblage à emboîtement et verrouillage ont déjà été proposés. Une technique est par exemple divulguée par le document FR-A-2 670 849 (numéro d'enregistrement national français FR 90 16 240) déposé le 24 décembre 1990 au nom de ECIA.

Si la technique décrite par ce document donne relativement satisfaction, elle n'est cependant pas sans inconvénients. En effet, elle est délicate à mettre en oeuvre et le dispositif présente une certaine fragilité.

FR-A-2 526 289 décrit un dispositif d'assemblage du type à emboîtement et verrouillage pour réunir deux pièces, l'une femelle et l'autre mâle, la pièce femelle présentant une douille creuse, une butée transversale et un premier organe servant de pêne, la pièce mâle présentant un embout complémentaire de la douille qui est destinée à le recevoir, une tranche qui est destinée à venir reposer contre la butée et un second organe transversal destiné à coopérer avec le premier organe lorsque l'embout est logé dans la douille et la tranche est en appui contre la butée afin de verrouiller l'une sur l'autre ces deux pièces emboîtées.

EP-A-0 359 406 décrit un siège pour véhicule automobile muni d'un dispositif d'assemblage pour réunir deux pièces mâle et femelle, la pièce mâle étant solidaire d'un flasque d'armature du siège et la pièce femelle étant solidaire d'un cadre de cette armature.

GB-A-2 195 733 décrit un dispositif d'assemblage d'une broche dans un support.

Le but de l'invention est de construire un dispositif d'assemblage à emboîtement et verrouillage perfectionné pour réunir deux pièces, l'une femelle et l'autre mâle, qui ne présente pas les difficultés précisées plus haut.

A cet effet, l'invention a pour objet un dispositif d'assemblage du type précité (connu par FR-A-2 526 289), caractérisé en ce que le premier organe forme une agrafe élastique et le second organe forme une gâche transversale, en ce que la pièce femelle se présente à la manière d'une plaque munie à une extrémité d'une potence formant la douille et munie à l'autre extrémité de la butée et de l'agrafe, en ce que l'embout présente une gouttière axiale avec deux rebords latéraux, en ce que la gâche se présente sous la forme de saignées ménagées dans les rebords, et en ce que l'agrafe se présente sous la forme d'une pièce en U avec des oreilles destinées à s'engager dans les saignées.

L'invention a aussi pour objet une application d'un tel dispositif d'assemblage à emboîtement et verrouillage à la construction de sièges notamment pour automobiles.

D'autres caractéristiques de l'invention ressortiront de la lecture de la description et des revendications qui suivent ainsi que de l'examen du dessin annexé, donné seulement à titre d'exemple, où:
- la Figure 1 est une vue perspective éclatée d'un mode de réalisation de l'invention;
- les Figures 2A et 2B sont, respectivement, des vues de côté et de face du mode de réalisation de la Figure 1 en position assemblée; et
- les Figures 3A et 3B sont des vues analogues à celles des Figures 2A et 2B d'un autre mode de réalisation, vu du côté opposé.

Les dispositifs d'assemblage à emboîtement et verrouillage ainsi que l'application de tels dispositifs notamment à des sièges de véhicules automobiles étant bien connus dans la technique, on ne décrira dans ce qui suit que ce qui concerne directement ou indirectement l'invention. Pour le surplus, l'homme du métier de la technique considérée puisera dans les solutions classiques courantes à sa disposition pour faire face aux problèmes particuliers auxquels il est confronté.

Dans ce qui suit, on utilise toujours un même numéro de référence pour identifier un élément homologue, quel que soit le mode de réalisation ou sa variante d'exécution.

Pour la commodité de l'exposé, on décrira successivement chacun des constituants d'un dispositif d'assemblage à emboîtement et verrouillage selon l'invention avant d'en exposer la fabrication et le fonctionnement.

Dans ce qui suit, on décrira un dispositif d'assemblage à emboîtement et verrouillage selon l'invention dans son application à un siège d'automobile dont seuls l'armature A et un flasque F de son articulation sont représentés partiellement.

Comme on le voit, le dispositif d'assemblage à emboîtement et verrouillage selon l'invention est destiné à réunir deux pièces, une pièce femelle 10 et une pièce mâle 20.

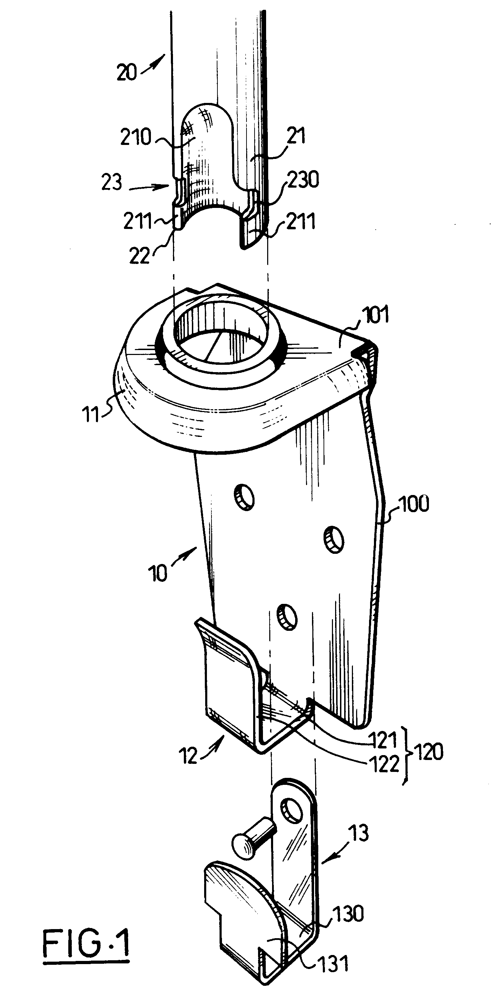

La pièce femelle 10 présente une douille 11 creuse, une butée 12 transversale et une agrafe 13 élastique servant de pêne. Comme on le voit pour le mode de réalisation illustré sur les Figures 1, 2 et 3, la pièce femelle 10 se présente sous la forme d'une plaque 100 avec une potence 101 dans laquelle est ménagée la douille 11. A l'autre extrémité de la plaque, opposée à celle où est située la potence, se trouve la butée 12 qui se présente, par exemple, à la manière d'un crochet 120 avec un pied 121 et un flanc 122. L'agrafe 13 se présente à la manière d'une pièce en U 130, dissymétrique, dont la branche la plus courte par exemple est munie au voisinage de son extrémité de deux oreilles 131 opposées ou similaires. L'autre branche est destinée à recevoir des moyens de fixation, tel un rivet ou une vis engagé dans un trou pour la réunir à la plaque.

La pièce mâle 20 présente un embout 21 complémentaire de la douille 11 qui est destiné à le recevoir, une tranche 22 qui est destinée à venir reposer contre la butée 12, et plus particulièrement son pied 121 et une gâche 23 transversale destinée à recevoir l'agrafe 13, et plus particulièrement ses oreilles 131, lorsque l'embout 21 est logé dans la douille 11 et la tranche 22 est en appui contre la butée 12, et plus spécialement son pied 121, afin de verrouiller l'une sur l'autre ces deux pièces emboîtées. Comme on le voit, l'embout 21 présente une gouttière 210 axiale avec deux rebords 211 latéraux. La gâche 23 se présente sous la forme de saignées 230 ménagées dans les rebords 211.

S'il y a lieu la douille 11 est munie d'une bague 110.

La pièce femelle en forme de plaque est faite de préférence en tôle mise en forme par des opérations classiques de découpe, emboutissage, poinçonnage, pliage. Comme on peut l'observer la douille a pratiquement la configuration d'une cuvette inversée dont le fond est partiellement évidé. L'agrafe est elle, faite de préférence en acier à ressort et s'il y a lieu sa branche qui porte les oreilles est évasée vers l'extérieur de manière à former une entrée facilitant la mise en place de la pièce mâle. La bague, annulaire, est par exemple faite en une matière plastique appropriée qui est engagée de préférence à force dans la douille 11.

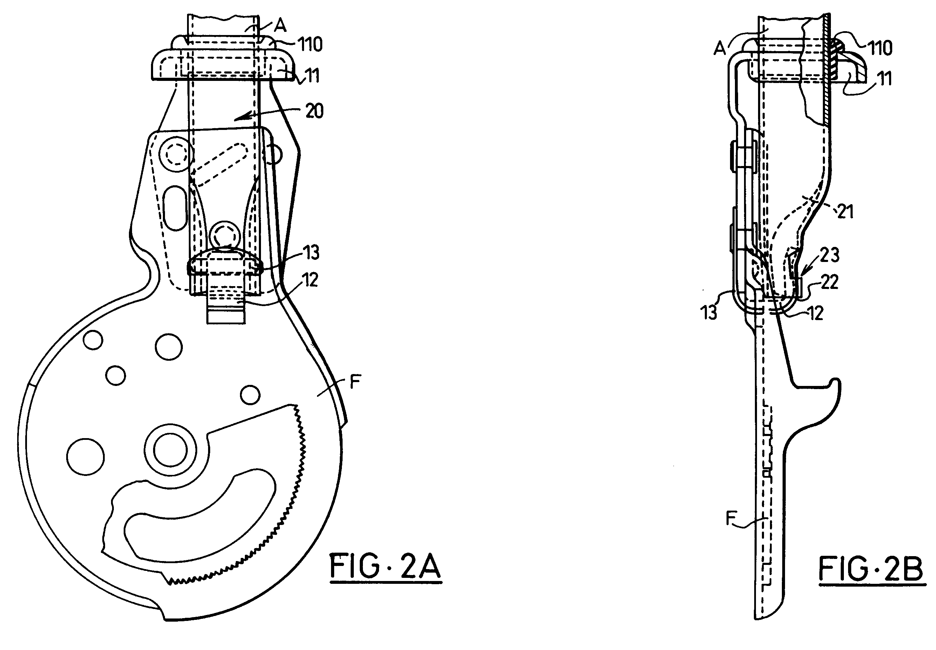

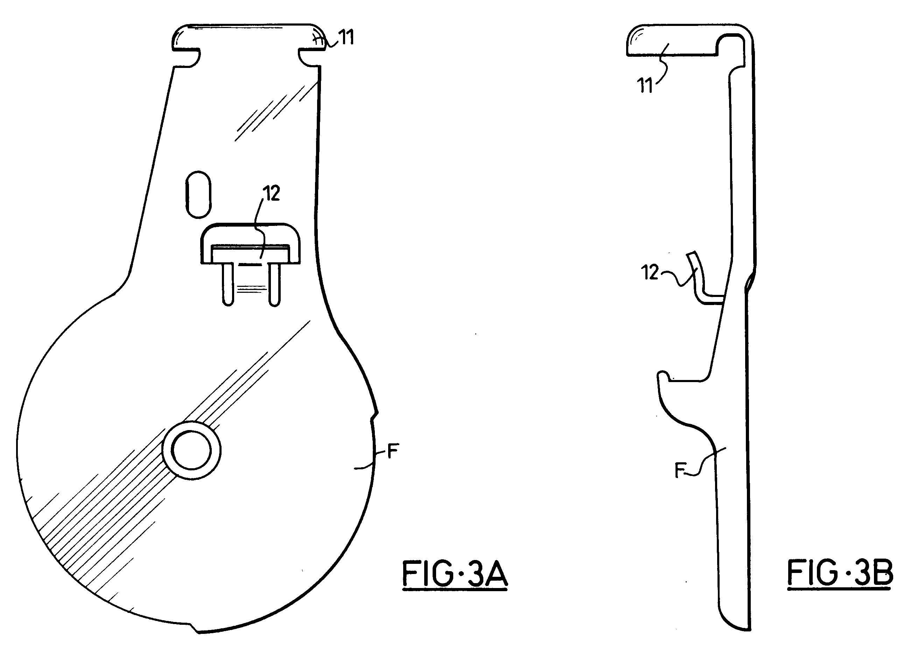

Dans le mode de réalisation des Figures 1 et 2, la pièce femelle est destinée à être rapportée sur le flasque sur lequel elle est fixée de toutes manières appropriées par exemple par rivetage, vissage, soudage, etc. Dans le mode de réalisation de la Figure 3, la pièce femelle est obtenue directement d'un seul tenant avec le flasque.

La pièce mâle est constituée, par exemple, par l'extrémité libre d'un cadre en U, tubulaire, mise en forme par emboutissage selon des techniques traditionnelles.

Pour assembler la pièce femelle et la pièce mâle, il suffit d'engager l'embout dans la douille et de les pousser l'une vers l'autre. En fin de course lorsque la tranche de l'embout rencontre la butée, pratiquement simultanément, l'agrafe qui joue le rôle d'un pêne s'engage dans la gâche et verrouille l'une sur l'autre les pièces mâle et femelle.

On comprend tout l'intérêt et tous les avantages du dispositif extrêmement simple selon l'invention, en particulier pour son application à l'assemblage de sièges d'automobiles.

On observera en particulier que l'assemblage est pratiquement automatique et résulte de l'engagement à fond de la pièce mâle dans la pièce femelle et que, une fois cet engagement fait, la réunion est pratiquement indéfectible puisque la désolidarisation ne peut être obtenue que si l'on agit volontairement sur l'agrafe à l'encontre de sa sollicitation élastique inhérente.

## Revendications

1. Dispositif d'assemblage du type à emboîtement et verrouillage pour réunir deux pièces, l'une femelle et l'autre mâle, la pièce femelle (10) présentant une douille (11) creuse, une butée (12) transversale et un premier organe (13) servant de pêne, la pièce mâle (20) présentant un embout (21) complémentaire de la douille (11) qui est destinée à le recevoir, une tranche (22) qui est destinée à venir reposer contre la butée (12) et un second organe (23) transversal destiné à coopérer avec le premier organe (13) lorsque l'embout (21) est logé dans la douille (11) et la tranche (22) est en appui contre la butée (12) afin de verrouiller l'une sur l'autre ces deux pièces emboîtées, caractérisé en ce que le premier organe forme une agrafe élastique (13) et le second organe forme une gâche transversale (23), en ce que la pièce femelle (10) se présente à la manière d'une plaque (100) munie à une extrémité d'une potence (101) formant la douille (11) et munie à l'autre extrémité de la butée (12) et de l'agrafe (13), en ce que l'embout (21) présente une gouttière (210) axiale avec deux rebords (211) latéraux, en ce que la gâche (23) se présente sous la forme de saignées (230) ménagées dans les rebords (211), et en ce que l'agrafe (13) se présente sous la forme d'une pièce en U (130) avec des oreilles (131) destinées à s'engager dans les saignées (230).

2. Dispositif selon la revendication 1, caractérisé en ce que la douille est munie d'une bague (110).

3. Application d'un dispositif selon l'une quelconque des revendications 1 à 2 à un siège d'automobile avec une armature de coussin faite d'un cadre et d'au moins un flasque, la pièce mâle étant solidaire du cadre et la pièce femelle étant solidaire du flasque.

4. Application selon la revendication 3, caractérisée en ce que la pièce femelle est rapportée sur le flasque.

5. Application selon la revendication 3, caractérisée en ce que la pièce femelle est d'un seul tenant avec le flasque.

## Claims

1. Snap action connection device for joining two parts, one female and the other male, the female part (10) having a hollow bush (11), a transverse abutment (12) and a first member (13) serving as a bolt, the male part (20) having a tip (21) complimentary of the bush (11) and serving to receive the same, an edge (22) for resting against the abutment (12) and a second transverse member (23) for cooperating with the first member (13) when the tip (21) is located in the bush (11) and the edge (22) bears against the abutment (12) in order to lock together said two parts, characterized in that the first member forms an elastic catch (13) and the second member forms a transverse keeper (23), in that the female part (10) is in the manner of a plate (100) provided at its end with a bracket (101) forming the bush (11) and provided at the other end with the abutment (12) and the catch (13), in that the tip (21) has an axial channel (210) with two lateral ledges (211), in that the keeper (23) is in the form of grooves (230) made in the ledges (211) and in that the catch (13) is in the form of a U-shaped part (130) with lugs (131) for engaging in the grooves (230).

2. Device according to claim 1, characterized in that the bush is provided with a ring (110).

3. Application of a device according to one of the claims 1 and 2 to a car seat with a cushion reinforcement formed by a frame and at least one flange, the male part being integral with the frame and the female part being integral with the flange.

4. Application according to claim 3, characterized in that the female part is joined to the flange.

5. Application according to claim 3, characterized in that the female part is in one piece with the flange.

## Patentansprüche

1. Schnappverbindungsvorrichtung zum Verbinden eines weiblichen und eines männlichen Stücks, wobei das weibliche Stück (10) eine Hohlbüchse (11), einen querliegenden Anschlag (12) und ein erstes Organ (13) aufweist, das als Riegel dient, wobei das männliche Stück (20) einen Ansatz (21), der zu der Büchse (11) komplementär ist, die ihn aufnehmen soll, einen Abschnitt (22), der am Anschlag (12) zum Anliegen kommen soll, und ein zweites querliegendes Organ (23) aufweist, das mit dem ersten Organ (13) zusammenwirken soll, wenn der Ansatz (21) in der Büchse (11) gelagert ist und der Abschnitt (22) am Anschlag (12) anliegt, um diese beiden ineinandergreifenden Stücke aufeinander zu verschließen, dadurch gekennzeichnet, daß das erste Organ eine elastische Kammer (13) und das zweite Organ einen querliegenden Verschließhaken (23) bildet, daß das weibliche Stück (10) in Form einer Platte (100) vorhanden ist, die an einem Ende mit einem Ausleger (101) versehen ist, der die Büchse (11) bildet, und am anderen Ende mit dem Anschlag (12) und der Klammer (13) versehen ist, daß der Ansatz (21) eine Axialrinne (210) mit zwei Seitenrändern (211) aufweist, daß sich der Verschließhaken in Form von Schnittspalten (230) darstellt, die in den Seitenrändern (211) ausgespart sind, und daß die Klammer (13) in Form eines U-förmigen Stückes (130) mit Lappen (131) vorhanden ist, die in die Schnittspalte (230) eingreifen sollen.

2. Vorrichtung nach Anspruch 1, dadurch gekennzeichnet, daß die Büchse mit einem Ring (110) versehen ist.

3. Anwendung einer Vorrichtung nach einem der Ansprüche 1 bis 2 für einen Kraftfahrzeugsitz mit einem Sitzlehnenbeschlag, der aus einem Rahmen und zumindest einem Flansch besteht, wobei das männliche Stück mit dem Rahmen und das weibliche Stück mit dem Flansch verbunden ist.

4. Anwendung nach Anspruch 3, dadurch gekennzeichnet, daß das weibliche Stück auf den Flansch aufgesetzt ist.

5. Anwendung nach Anspruch 3, dadurch gekennzeichnet, daß das weibliche Stück mit dem Flansch in einem Stück hergestellt ist.
